# EUROPÄISCHE PATENTSCHRIFT

(11) **EP 3 837 040 B1**
(45) Veröffentlichungstag und Bekanntmachung des Hinweises auf die Patenterteilung: **10.08.2022**
(21) Anmeldenummer: 20726709.7
(22) Anmeldetag: 29.04.2020
(51) Int. Cl.: B01F 27/07, B01F 27/113, C02F 3/12, B01F 101/00

(54) **PROPELLER UND RÜHRWERK ZUM UMWÄLZEN VON ABWASSER IN EINEM KLÄRBECKEN**
PROPELLER AND STIRRER FOR CIRCULATING WASTEWATER IN A CLARIFIER
HÉLICE ET AGITATEUR POUR LA CIRCULATION DES EAUX USÉES DANS UN CLARIFICATEUR

(30) Priorität: 03.05.2019 DE 102019111492
(43) Veröffentlichungstag der Anmeldung: 23.06.2021
(73) Patentinhaber: INVENT Umwelt- und Verfahrenstechnik AG, 91058 Erlangen (DE)
(72) Erfinder: HÖFKEN, Marcus, 91054 Erlangen (DE); HAGSPIEL, Thomas, 92353 Postbauer-Heng (DE)
(74) Vertreter: Dr. Gassner & Partner mbB
(86) Internationale Anmeldenummer: PCT/EP2020/061863
(87) Internationale Veröffentlichungsnummer: WO 2020/225049

(56) Entgegenhaltungen:
- EP-A1- 0 582 856
- EP-A1- 3 287 356
- WO-A1-2009/018916
- WO-A1-2017/108255
- US-A- 3 160 249

## Beschreibung

Propeller und Rührwerk zum Umwälzen von Abwasser in einem Klärbecken Die Erfindung betrifft einen Propeller sowie ein Rührwerk zum Umwälzen von Abwasser in einem Klärbecken.

Propeller sind nach dem Stand der Technik allgemein bekannt. Sie werden insbesondere zum Antrieb von Schiffen, zum Umwälzen von Flüssigkeiten u.dgl. benutzt. Üblicherweise umfasst ein Propeller eine Nabe zur Befestigung an einer Propellerwelle. Die Nabe kann in einem Stück mit dem Propeller gefertigt sein. Daneben sind auch Propeller mit verstellbaren Propellerflügeln bekannt. Die verstellbaren Propellerflügel sind an der Nabe befestigt.

Propeller werden u. a. auch bei sogenannten Hyperboloid-Rührwerken zum Umwälzen von Abwasser verwendet. Dabei ist der Propeller oberhalb eines Hyperboloid-Rührkörpers an der Welle angebracht. Mittels des Propellers wird das Abwasser in Richtung des Hyperboloid-Rührkörpers beschleunigt. Eine solche Rührvorrichtung ist beispielsweise aus der WO 2009/018916 A1 bekannt.

Propeller, welche in einem Stück mit der Nabe hergestellt sind, weisen ein großes Transportvolumen auf. Abgesehen davon ist es mitunter aufwendig, Propeller an einer Welle zu montieren, wenn am Ende der Welle bereits ein Rührkörper, beispielsweise ein Hyperboloid-Rührkörper, angebracht ist.

WO 2017/108255 A1 offenbart einen Propeller entsprechend dem Oberbegriff des Anspruchs 1.

Aufgabe der Erfindung ist es, die Nachteile nach dem Stand der Technik zu beseitigen. Es soll insbesondere ein Propeller angegeben werden, der ein geringes Transportvolumen aufweist. Nach einem weiteren Ziel der Erfindung soll sich der Propeller auch dann an einer Welle montieren lassen, wenn an deren Ende bereits ein Rührkörper, Propeller oder dgl. angebracht ist. Abgesehen davon soll eine Rührvorrichtung angegeben werden, welche sich mit verringertem Aufwand montieren lässt.

Diese Aufgabe wird durch die Merkmale der Patentansprüche 1 und 6 gelöst.

Zweckmäßige Ausgestaltungen der Erfindung ergeben sich aus den abhängigen Patentansprüchen.

Nach Maßgabe der Erfindung wird ein Propeller zur klemmenden Befestigung an einer Welle mit einem in Axialrichtung sich erstreckenden Mitnehmerprofil vorgeschlagen,
wobei der Propeller aus mehreren Elementen gebildet ist,
wobei jedes Element einen Nabenabschnitt mit einem zum Mitnehmerprofil korrespondierenden Gegenprofil aufweist,
wobei an der einen Seite des Nabenabschnitts ein erster Verbindungsabschnitt und ein sich vom ersten Verbindungsabschnitt erstreckender Propellerflügel angeformt sind, und an der gegenüberliegenden anderen Seite des Nabenabschnitts ein zweiter Verbindungsabschnitt angeformt ist,
wobei der erste Verbindungsabschnitt zur formschlüssigen Anlage an einen weiteren zweiten Verbindungsabschnitt eines benachbarten weiteren Elements ausgebildet ist, und
wobei bei einer Verbindung der mit ihren Verbindungsabschnitten aneinander liegenden Elemente sich die Nabenabschnitte sämtlicher Elemente zu einer formschlüssig die Welle umgebenden Nabe ergänzen.

Indem der vorgeschlagene Propeller aus mehreren Elementen gebildet ist, kann dessen Transportvolumen vermindert werden. Der vorgeschlagene Propeller lässt sich insbesondere auch dann an einer Welle montieren, wenn deren Ende bereits mit einem Rührkörper, Propeller oder dgl. versehen ist. Indem sich die Nabenabschnitte sämtlicher Elemente zu einer formschlüssig die Welle umgebende Nabe ergänzen, kann eine formschlüssige mit der Welle erreicht werden. - Der erste Verbindungsabschnitt ist zur formschlüssigen Anlage an einen weiteren zweiten Verbindungsabschnitt eines benachbarten weiteren Elements ausgebildet. Die Elemente bzw. deren Verbindungsabschnitte sind zweckmäßigerweise so ausgestaltet, dass im Montagezustand zwischen dem ersten Verbindungsabschnitt und dem benachbarten weiteren zweiten Verbindungsabschnitt ein schmaler Spalt verbleibt. Das ermöglicht neben der formschlüssigen Verbindung mit der Welle zusätzlich eine kraftschlüssige oder klemmende Verbindung. Die Verbindung weist eine hervorragende Festigkeit auf.

Am ersten und/oder zweiten Verbindungsabschnitt kann eine dünne Platte aus einem elastischen Material, beispielsweise Gummi oder dgl., angebracht sein. Die Platte verschließt im Montagezustand einen zwischen dem ersten Verbindungsabschnitt und dem benachbarten weiteren zweiten Verbindungsabschnitt gebildeten Spalt. Das wirkt einem Einfangen von zopfbildenden Verunreinigungen entgegen.

Bei der Welle handelt es sich vorzugsweise um eine Keilwelle. Selbstverständlich ist es auch denkbar, dass die Welle ein anderes sich in Axialrichtung erstreckendes Mitnehmerprofil aufweist. Beispielsweise kann die Welle ein Polygonprofil, Zahnwellenprofil, eine Kerbnerzahnung u. dgl. aufweisen. In diesem Fall kann der Nabenabschnitt ein entsprechend korrespondierendes Gegenprofil aufweisen. Nach einer vorteilhaften Ausgestaltung ist der Propeller aus zumindest drei Elementen, vorzugsweise aus genau vier Elementen, gebildet. Die Elemente können identisch ausgebildet sein. Das vermindert die Herstellungskosten des Propellers.

Erfindungsgemäss weist der erste Verbindungsabschnitt zumindest zwei erste Durchbrüche auf. Die ersten Durchbrüche können als Gewindebohrungen ausgebildet sein. Der zweite Verbindungsabschnitt kann zumindest zwei zu den ersten Durchbrüchen korrespondierende zweite Durchbrüche zum Durchführen von Schrauben aufweisen. Das ermöglicht eine einfache und schnelle Verbindung der Elemente.

Nach weiterer Maßgabe der Erfindung wird eine Rührvorrichtung zum Umwälzen von Abwasser in einem Klärbecken vorgeschlagen, mit einem Motor und einer sich davon erstreckenden Welle mit einem in Axialrichtung sich erstreckenden Mitnehmerprofil, wobei an der Welle ein erfindungsgemäßer Propeller angebracht ist. Die vorgeschlagene Rührvorrichtung lässt sich schnell und einfach montieren. Insbesondere ist es möglich, den erfindungsgemäßen Propeller auch dann zu montieren, wenn am Ende der Welle bereits ein weiterer Propeller, Hyperboloid-Rührkörper oder dgl. angebracht ist.

Bei der Welle kann es sich wiederum zweckmäßigerweise um eine Keilwelle handeln. Bei der Rührvorrichtung kann es sich um ein Hyperboloid-Rührwerk handeln. Dabei ist zweckmäßigerweise am Ende der sich hängend vom Motor erstreckenden Welle ein Hyperboloid-Rührkörper angebracht. Eine solche Rührvorrichtung lässt sich unter Verwendung des erfindungsgemäßen Propellers besonders einfach montieren.

Nachfolgend wird ein Ausführungsbeispiel des Propellers anhand der Zeichnung näher erläutert. Es zeigen:

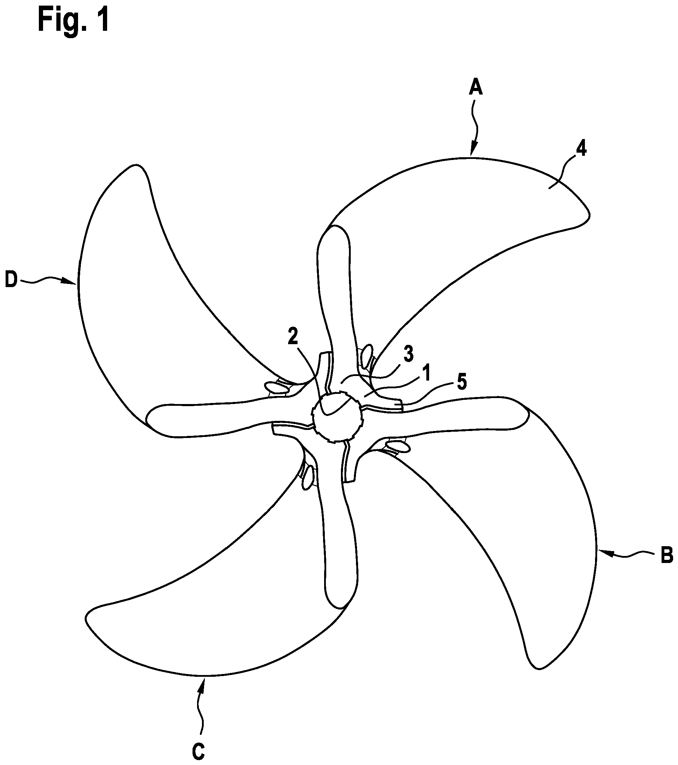

Fig. 1 eine Draufsicht auf einen Propeller,
Fig. 2 eine vergrößerte Teilansicht gemäß Fig. 1,
Fig. 3 eine perspektivische Ansicht gemäß Fig. 2 und
Fig. 4 eine perspektivische Ansicht zweier aneinander liegender Elemente.

Der in den Figuren gezeigte Propeller ist aus mehreren einstückig ausgebildeten Elementen A, B, C und D hergestellt. Im vorliegenden Ausführungsbeispiel ist der Propeller aus genau vier Elementen A, B, C und D gebildet. Die Elemente A, B, C und D können identisch ausgebildet sein. Im Weiteren wird der Propeller anhand des Elements A näher beschreiben. Die nachfolgende Beschreibung gilt gleichermaßen für die übrigen Elemente B, C, und D.

Das Element A weist einen Nabenabschnitt 1 auf, dessen Innenumfang mit einem Gegenprofil 2 versehen ist. Das Gegenprofil 2 korrespondiert zu einem (hier nicht gezeigten) Mitnehmerprofil einer Keilwelle (hier nicht gezeigt). Vom Nabenabschnitt 1 erstreckt sich in einem Winkel, hier in einem Winkel von etwa 45 Grad, ein erster Verbindungsabschnitt 3. Vom ersten Verbindungsabschnitt 3 erstreckt sich ein Propellerflügel 4, vorzugsweise genau ein Propellerflügel 4. An der anderen Seite des Nabenabschnitts 1 ist ein zweiter Verbindungsabschnitt 5 angeformt. Der zweite Verbindungsabschnitt 5 bildet mit dem ersten Verbindungsabschnitt 3 einen Winkel von etwa 90 Grad. Es ist offensichtlich, dass der Winkel zwischen dem ersten 3 und dem zweiten Verbindungsabschnitt 5 sich ändert, wenn der vorgeschlagene Propeller nicht aus vier Elementen, sondern aus drei, fünf oder mehr Elementen gebildet ist.

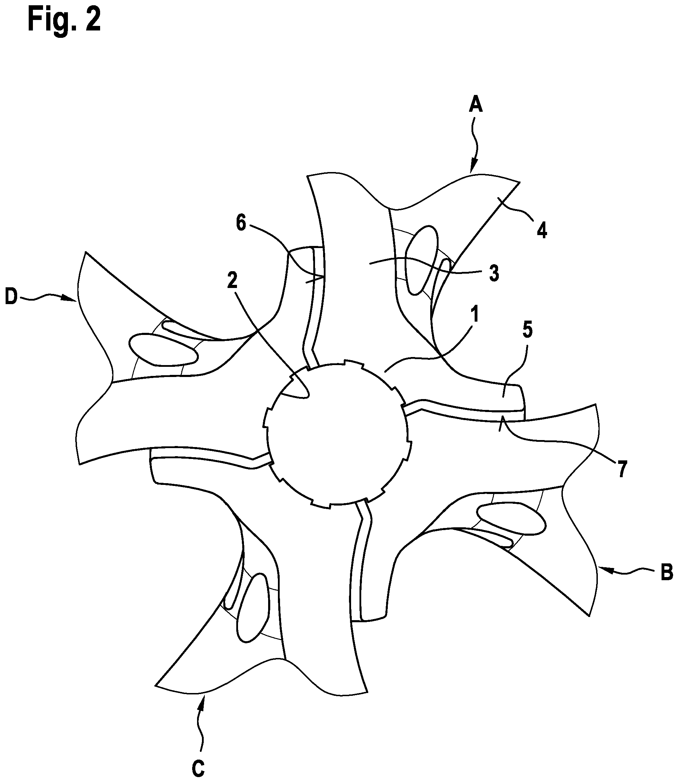

Der erste Verbindungsabschnitt 3 weist in Umfangsrichtung eine erste Anlagefläche 6 auf. Der zweite Verbindungsabschnitt 5 weist in Umfangsrichtung eine zweite Anlagefläche 7 auf. Die erste 6 und die zweite Anlagefläche 7 sind korrespondierend ausgebildet, so dass der erste 3 und der zweite Verbindungsabschnitt 5 im Wesentlichen formschlüssig aneinander gelegt werden können (siehe Fig. 2).

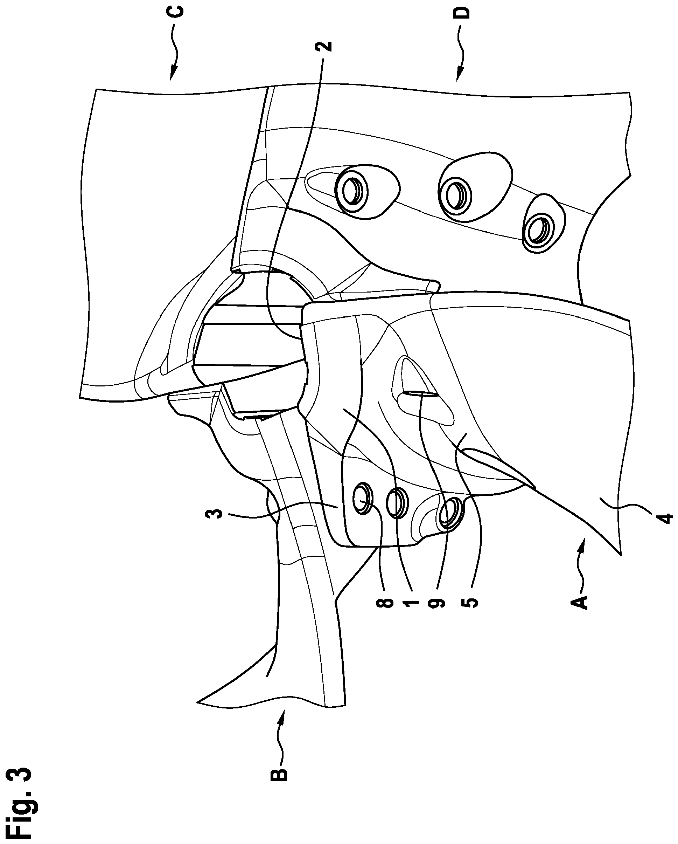

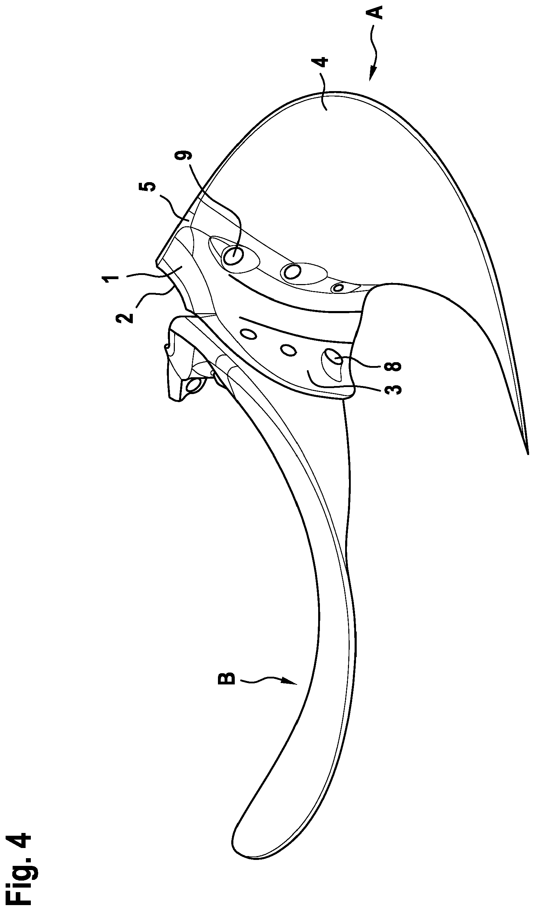

Wie insbesondere aus den Fig. 3 und 4 ersichtlich ist, weist der erste Verbindungsabschnitt 3 erste Durchbrüche 8 auf. Der zweite Verbindungsabschnitt 5 weist zweite Durchbrüche 9 auf. Bei aneinander anliegenden benachbarten Elementen A, B, C und D liegen jeweils die ersten 8 und die zweiten Durchbrüche 9 einander gegenüber, so dass durch die ersten 8 und die zweiten Durchbrüche 9 Befestigungsbolzen hindurchgeführt werden können. Zweckmäßigerweise sind in diesem Fall die ersten Durchbrüche 8 als Gewindebohrungen ausgehführt.

Zur Montage des vorgeschlagenen Propellers ist es lediglich erforderlich, die Elemente A, B, C, D um die (hier nicht gezeigte) Welle zu positionieren und nachfolgend mittels Schrauben miteinander zu verbinden. Die Nabenabschnitte ergänzen sich bei verbundenen Elementen A, B, C und D zu einer Nabe, welche mit dem Gegenprofil 2 formschlüssig in das Mitnehmerprofil der Welle eingreift. Abgesehen davon sind die Elemente A, B, C und D so ausgebildet, dass sie im verbundenen Zustand die Welle kraftschlüssig bzw. klemmend umschließen.

Der erfindungsgemäße Propeller lässt sich insbesondere relativ einfach an einer Welle montieren, an deren Ende ein Hyperboloid-Rührkörper angebracht ist. Es wird insoweit beispielhaft verweisen auf die WO 2009/018916 A1, WO 2006/108538 A1 sowie DE 298 03 497 U1.

### Bezugszeichenliste

- 1: Nabenabschnitt
- 2: Gegenprofil
- 3: erster Verbindungsabschnitt
- 4: Propellerflügel
- 5: zweiter Verbindungsabschnitt
- 6: erste Anlagefläche
- 7: zweite Anlagefläche
- 8: erste Durchbrüche
- 9: zweite Durchbrüche

- A, B, C, D: Element

## Patentansprüche

1. Propeller zur klemmenden Befestigung an einer Welle mit einem in Axialrichtung sich erstreckenden Mitnehmerprofil,
wobei der Propeller aus mehreren Elementen (A, B, C, D) gebildet ist,
wobei jedes Element (A, B, C, D) einen Nabenabschnitt (1) mit einem zum Mitnehmerprofil korrespondierenden Gegenprofil (2) aufweist,
wobei an der einen Seite des Nabenabschnitts (1) ein erster Verbindungsabschnitt (3) und ein sich vom ersten Verbindungsabschnitt (3) erstreckender Propellerflügel (4) angeformt sind, und an der gegenüberliegenden anderen Seite des Nabenabschnitts (1) ein zweiter Verbindungsabschnitt (5) angeformt ist,
wobei der erste Verbindungsabschnitt (3) zur formschlüssigen Anlage an einen weiteren zweiten Verbindungsabschnitt (5) eines benachbarten weiteren Elements (A, B, C, D) ausgebildet ist,
wobei bei einer Verbindung der mit ihren Verbindungsabschnitten (3, 5) aneinander liegenden Elemente (A, B, C, D) sich die Nabenabschnitte (1) sämtlicher Elemente (A, B, C, D) zu einer formschlüssig die Welle umgebende Nabe ergänzen,
**dadurch gekennzeichnet, dass**
der erste Verbindungsabschnitt (3) zumindest zwei erste Durchbrüche (8) aufweist.

2. Propeller nach Anspruch 1, wobei die Welle eine Keilwelle ist.

3. Propeller nach einem der vorhergehenden Ansprüche, wobei der Propeller aus zumindest drei Elementen (A, B, C, D) vorzugsweise aus genau vier Elementen (A, B, C, D) gebildet ist.

4. Propeller nach einem der vorhergehenden Ansprüche, wobei die ersten Durchbrüche (8) als Gewindebohrungen ausgebildet sind.

5. Propeller nach einem der vorhergehenden Ansprüche, wobei der zweite Verbindungsabschnitt (5) zumindest zwei zu den ersten Durchbrüchen (8) korrespondierende zweite Durchbrüche (9) zum Durchführen von Schrauben aufweist.

6. Rührvorrichtung zum Umwälzen von Abwasser in einem Klärbecken, mit einem Motor und einer sich davon erstreckenden Welle mit einem in Axialrichtung sich erstreckenden Mitnehmerprofil, wobei an der Welle ein Propeller nach einem der vorhergehenden Ansprüche angebracht ist.

7. Rührvorrichtung nach Anspruch 6, wobei die Welle eine Keilwelle ist.

8. Rührvorrichtung nach Anspruch 6 oder 7, wobei am Ende der sich hängend vom Motor erstreckenden Welle ein Hyperboloid-Rührkörper angebracht ist.

## Claims

1. A propeller to be secured by clamping to a shaft having a driver profile extending in the axial direction,
wherein the propeller is formed from a number of elements (A, B, C, D),
wherein each element (A, B, C, D) has a hub portion (1) with a mating profile (2) corresponding to the driver profile,
wherein a first connection portion (3) and a propeller blade (4) extending from the first connection portion (3) are moulded on one side of the hub portion (1), and a second connection portion (5) is moulded on the opposite, other side of the hub portion (1),
wherein the first connection portion (3) is designed to bear interlockingly against a further, second connection portion (5) of an adjacent further element (A, B, C, D),
wherein, when the elements (A, B, C, D) bearing against one another by their connection portions (3, 5) are connected, the hub portions (1) of all elements (A, B, C, D) together form a hub that surrounds the shaft interlockingly,
**characterized in that**
the first connection portion (3) has at least two first apertures (8).

2. The propeller according to claim 1, wherein the shaft is a splined shaft.

3. The propeller according to any one of the preceding claims, wherein the propeller is formed from at least three elements (A, B, C, D), preferably from precisely four elements (A, B, C, D).

4. The propeller according to any one of the preceding claims, wherein the first apertures (8) are formed as threaded bores.

5. The propeller according to any one of the preceding claims, wherein the second connection portion (5) has at least two second apertures (9), corresponding to the first apertures (8), for the passage of screws.

6. An agitation apparatus for circulating wastewater in a clarifier, the agitation apparatus comprising a motor and a shaft extending therefrom with a driver profile extending in the axial direction, wherein a propeller according to any one of the preceding claims is mounted on the shaft.

7. The agitation apparatus according to claim 6, wherein the shaft is a splined shaft.

8. The agitation apparatus according to claim 6 or 7, wherein a hyperboloid agitator body is mounted on the end of the shaft extending hanging from the motor.

## Revendications

1. Hélice pour une fixation par serrage sur un arbre ayant un profil d'entraînement s'étendant en sens axial,
en ce que l'hélice comprend plusieurs éléments (A, B, C, D),
en ce que chaque élément (A, B, C, D) comporte une section de moyeu (1) avec un contre-profil (2) correspondant au profil d'entraînement,
en ce qu'une première section de raccordement (3) et une aile d'hélice (4) s'étendant à partir de la première section de raccordement (3) sont formées au niveau d'un côté de la section de moyeu (1), et une deuxième section de raccordement (5) est formée sur l'autre côté opposé de la section de moyeu (1),
en ce que la première section de raccordement (3) pour l'appui par complémentarité de forme est réalisée au niveau d'une autre deuxième section de raccordement (5) d'un autre élément (A, B, C, D) adjacent,
en ce que les sections de moyeu (1) de tous les éléments (A, B, C, D) se complètent en un moyeu entourant l'arbre par complémentarité de forme lors d'un raccordement des éléments (A, B, C, D) juxtaposés à leurs sections de raccordement (3, 5),
**caractérisée en ce que**
la première section de raccordement (3) présente au moins deux premiers passages (8).

2. Hélice selon la revendication 1, en ce que l'arbre est un arbre cannelé.

3. Hélice selon l'une des revendications précédentes, en ce que l'hélice est composée d'au moins trois éléments (A, B, C, D), de préférence d'exactement quatre éléments (A, B, C, D).

4. Hélice selon l'une des revendications précédentes, en ce que les premiers passages (8) sont réalisés sous forme de trous taraudés.

5. Hélice selon l'une des revendications précédentes, en ce que la deuxième section de raccordement (5) comporte au moins deux deuxièmes passages (9) correspondant aux premiers passages (8) pour l'introduction de vis.

6. Dispositif d'agitation destiné à faire circuler des eaux usées contenues dans un bassin de décantation, avec un moteur et un arbre s'étendant à partir de celui-ci avec un profil d'entraînement s'étendant en sens axial, en ce qu'une hélice est montée sur l'arbre selon l'une des revendications précédentes.

7. Dispositif d'agitation selon la revendication 6, en ce que l'arbre est un arbre cannelé.

8. Dispositif d'agitation selon la revendication 6 ou 7, en ce qu'un corps d'agitation hyperboloïde est monté à l'extrémité de l'arbre s'étendant de manière suspendue à partir du moteur.
